# FASCICULE DE BREVET EUROPEEN

(11) **EP 0 743 742 B1**
(45) Date de publication et mention de la délivrance du brevet: **27.09.2000**
(21) Numéro de dépôt: 96410045.7
(22) Date de dépôt: 06.05.1996
(51) Int. Cl.: H02M 1/12, H05B 41/295

(54) **Amélioration du facteur de puissance d'une alimentation redressée**
Leistungsfaktorverbesserung für eine gleichgerichtete Leistungsversorgung
Power factor improvement of a rectified power supply

(30) Priorité: 16.10.1995 FR 9512309; 09.05.1995 FR 9505686
(43) Date de publication de la demande: 20.11.1996
(73) Titulaire: STMicroelectronics S.A., 94250 Gentilly (FR)
(72) Inventeur: Wuidart, Luc, 83910 Pourrières (FR); Bailly, Alain, 13109 Simiane (FR)
(74) Mandataire: de Beaumont, Michel

(56) Documents cités:
- EP-A- 0 600 340
- DE-A- 2 226 197
- DE-A- 4 426 258
- JP-A- 61 173 322

## Description

La présente invention concerne le domaine des alimentations redressées obtenues à partir d'une tension alternative, par exemple la tension alternative du secteur, et destinées notamment à servir de base à un système d'alimentation à découpage.

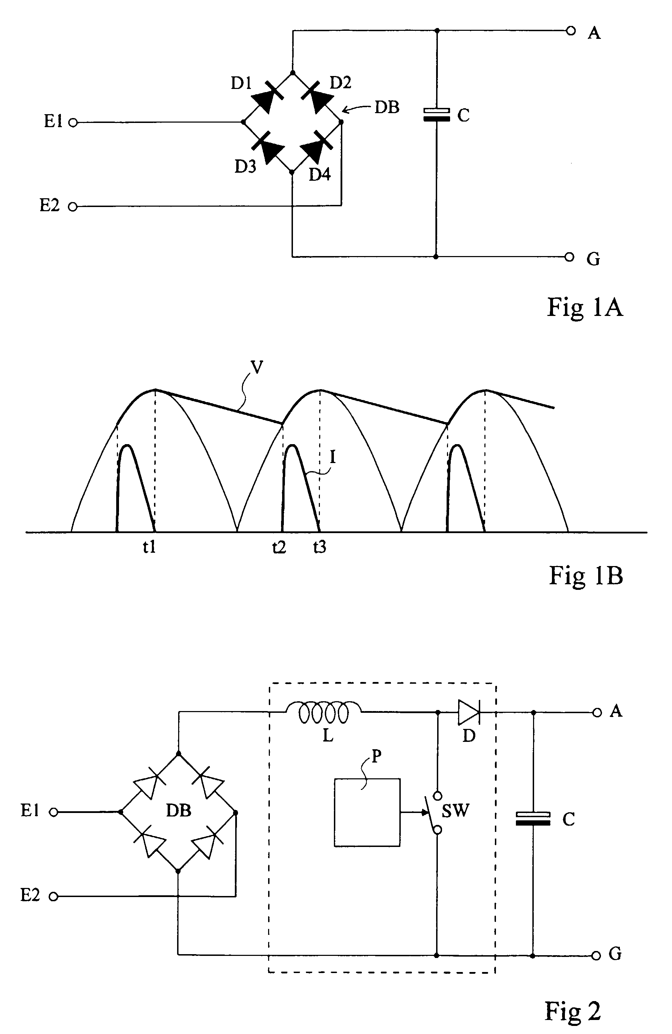

La figure 1A représente le schéma le plus simple d'un redresseur classique. Ce redresseur comprend un pont de diodes DB comprenant quatre diodes de redressement D1 à D4 dont une première diagonale est connectée aux bornes E1 et E2 d'une ligne d'alimentation alternative et dont l'autre diagonale est connectée aux bornes A et G d'une alimentation continue redressée. La borne G est habituellement une borne de masse. Entre les bornes A et G est disposé un condensateur de stockage C. Derrière les bornes A et G est par exemple prévu un système d'alimentation à découpage.

La figure 1B représente l'allure de la tension V et du courant I entre les bornes A et G du pont redresseur.

En l'absence du condensateur C, la tension entre les bornes A et G serait constituée par les sinusoïdes du secteur redressées.

A partir d'un instant t1 correspondant au maximum d'une sinusoïde, la capacité C est sensiblement complètement chargée puis se décharge pour alimenter un circuit placé entre les bornes A et G. A un instant t2, la tension du secteur redressée devient plus importante que la tension aux bornes de la capacité. Alors, pendant une brève période, comprise entre les instants t2 et t3, le secteur recharge la capacité fournissant une impulsion de courant I. Ainsi, un tel circuit d'alimentation pompe sur le secteur des impulsions de courant relativement brèves au voisinage de la tension maximum du secteur. Les théories de Fourier nous enseignent que plus une impulsion est brève, plus son spectre fréquentiel est étendu. Il en résulte donc qu'un grand nombre d'harmoniques est créé sur le secteur entre les bornes E1 et E2. Ceci est néfaste au fonctionnement d'un réseau.

On cherche à réduire ces harmoniques, c'est-à-dire, en langage simple, à élargir l'impulsion de courant I.

Pour cela, on connaît des circuits dits de compensation de facteur de puissance tels que celui illustré en figure 2 dans lequel on a inséré entre une des bornes du pont redresseur et la borne A la connexion série d'une inductance L et d'une diode D. Le point de raccordement entre l'inductance L et la diode D est connecté à la borne G par l'intermédiaire d'un commutateur commandé SW. Un circuit de type processeur P commande le commutateur SW de façon appropriée en fonction des tension et courant détectés. Un tel circuit, disponible par exemple auprès de la Société SGS-Thomson Microelectronics sous la référence L6560, permet d'obtenir une correction quasiment parfaite du facteur de puissance, c'est-à-dire que le courant I prend la forme d'une sinusoïde en phase avec la sinusoïde de tension.

Un inconvénient fondamental d'un circuit de compensation du facteur de puissance réside dans son coût puisqu'il comprend, d'une part, des composants réalisables sous forme de composants semiconducteurs tels que le processeur, le commutateur et la diode et, d'autre part, une inductance qui reste toujours un élément coûteux et éventuellement fragile.

On a aussi proposé des circuits sans inductance (voir JP-A-61/173322) dans lesquels la décharge du condensateur de stockage est retardée, mais ces circuits ne permettent pas d'obtenir en pratique un élargissement suffisant des impulsions de courant extraites du secteur. Un tel circuit est également cité dans DE-A-2226197. Ce document propose en outre d'associer plusieurs condensateurs mais sans indiquer comment.

Ainsi, un objet de la présente invention est de prévoir un procédé et un dispositif d'amélioration du taux d'harmoniques renvoyés sur le secteur par un circuit de redressement.

Pour atteindre cet objet, la présente invention prévoit un procédé de fourniture d'une tension d'alimentation redressée sur au moins un condensateur disposé du côté redressé d'un pont redresseur comprenant les étapes suivantes :
prévoir une pluralité de condensateurs de valeurs progressivement décroissantes en série avec des résistances également de valeurs décroissantes,
inhiber la décharge des condensateurs pendant la phase initiale de décroissance de la tension alternative appliquée au pont redresseur après chaque passage par un maximum, les durées d'inhibition des condensateurs de valeur progressivement décroissantes étant croissantes et, dès qu'un condensateur est mis en phase de décharge, le condensateur précédemment en décharge étant bloqué.

La présente invention prévoit aussi un dispositif d'amélioration du taux d'harmoniques renvoyés sur le secteur dans une alimentation redressée comprenant un pont redresseur comprenant une pluralité de condensateurs de valeurs séquentiellement décroissantes connectés à une première borne de sortie du pont redresseur, un premier chemin de charge comprenant une résistance entre la deuxième borne de chaque condensateur et une deuxième borne de sortie, et un deuxième chemin de décharge commutable, associé à des moyens de commande pour commuter à l'état fermé le chemin de décharge seulement après le passage par un maximum de la tension du secteur, les chemins de décharge étant séquentiellement fermés, un seul chemin de décharge étant fermé à un instant donné.

Selon un mode de réalisation de la présente invention, les moyens de commande comparent la tension sur la première borne à deux tensions de référence.

Selon un mode de réalisation de la présente invention, les moyens de commande comparent la tension du secteur redressée à deux tensions de référence.

Selon un mode de réalisation de la présente invention, les deuxièmes tensions de références sont égales.

Selon un mode de réalisation de la présente invention, chaque chemin de charge comprend une résistance en série avec une diode.

Selon un mode de réalisation de la présente invention, chaque chemin de charge comprend un condensateur, une résistance, et une diode, et chaque chemin de décharge comprend un commutateur connecté à la deuxième borne d'alimentation et à la deuxième borne du pont redresseur par l'intermédiaire d'une diode commune.

Selon un mode de réalisation de la présente invention, le commutateur de chaque chemin de décharge est constitué d'un thyristor dont la gâchette est connectée en série avec une diode zener dont la deuxième borne est reliée, pour le premier étage, à l'anode du thyristor correspondant et, pour les autres étages, au point de connexion de la résistance et de la diode de l'étage précédent.

Selon un mode de réalisation de la présente invention, il est prévu des moyens de fourniture d'une deuxième tension d'alimentation redressée, faible devant la première tension d'alimentation redressée, correspondant sensiblement au potentiel sur la deuxième borne de l'un des condensateurs.

Selon un mode de réalisation de la présente invention, la tension sur ladite deuxième borne est envoyée à un circuit de stockage comprenant une diode en série avec un condensateur auxiliaire.

Selon un mode de réalisation de la présente invention, il est prévu des moyens de régulation de la tension aux bornes du condensateur auxiliaire.

Selon un mode de réalisation de la présente invention, les moyens de régulation comprennent une diode de type Shockley connectée aux bornes de la liaison série comprenant ladite diode et ledit condensateur auxiliaire.

Ces objets, caractéristiques et avantages ainsi que d'autres de la présente invention seront exposés en détail dans la description suivante de modes de réalisation particuliers faite, à titre non-limitatif, en relation avec les figures jointes parmi lesquelles :
la figure 1A représente schématiquement un dispositif redresseur d'alimentation selon l'art antérieur ;
la figure 1B représente des courbes de tension et de courant associées au circuit redresseur de la figure 1A ;
la figure 2 représente un circuit classique de correction de facteur de puissance ;
la figure 3 représente un circuit de correction de facteur de puissance à un seul étage ;
les figures 4A à 4D illustrent des formes de tension et de courant et des signaux logiques apparaissant dans le circuit de la figure 3 ;
la figure 5 représente un mode de réalisation à deux étages d'un circuit selon la présente invention ;
la figure 6 représente l'allure du courant obtenu avec le circuit de la figure 5 ;
les figures 7 à 12 représentent divers modes de réalisation de circuits à plusieurs étages selon l'invention ;
la figure 13 représente une variante d'un circuit à deux étages selon la présente invention ;
la figure 14 représente un mode de réalisation du circuit de la figure 13 ;
la figure 15 représente des courbes de tension et de courant en fonction du temps illustrant le fonctionnement des dispositifs des figures 13 et 14 ;
la figure 16 illustre un circuit de fourniture d'une basse tension à partir d'un circuit de fourniture d'une tension élevée selon la présente invention ;
la figure 17 représente un exemple simple de régulateur parallèle ; et
la figure 18 représente une variante du circuit selon la présente invention adapté à la fourniture simultanée de tensions haute et basse.

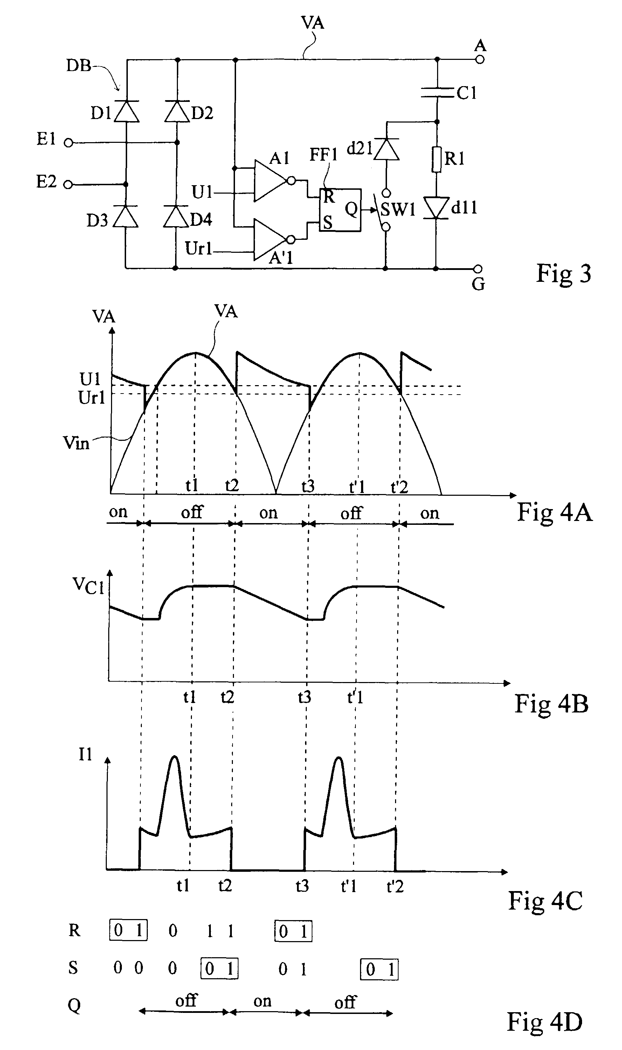

La figure 3 illustre un mode de réalisation simple d'un circuit de correction de facteur de puissance à un seul étage. Un pont de diodes DB comprenant des diodes D1 à D4 reçoit la tension du secteur entre des bornes E1 et E2 et fournit une tension redressée entre des bornes A et G. Un condensateur de stockage C1 correspondant au condensateur C de la figure 1 est connecté par l'une de ses bornes à la borne A et par l'autre de ses bornes à la borne G par l'intermédiaire de deux trajets en parallèle. Le premier trajet comprend une résistance R1 et une diode d11 polarisée pour laisser passer du courant de la borne A vers la borne G. Le deuxième trajet comprend un interrupteur commandé SW1 en série avec une diode d21 polarisée pour laisser passer du courant de la borne G vers la borne A. Le commutateur SW1 est commandé par la sortie Q d'une bascule RS FF1 dont l'entrée R reçoit la sortie d'un comparateur inverseur A1 et dont l'entrée S reçoit la sortie d'un comparateur inverseur A'1. Les comparateurs A1 et A'1 comparent respectivement la tension VA sur la borne A à des tensions de référence U1 et Ur1.

On notera que le premier trajet comprenant les résistances R1 et d11 est un trajet de charge du condensateur C1 et le deuxième trajet comprenant la diode d21 et le commutateur SW1 est un trajet de décharge de ce condensateur C1. Tant que le deuxième trajet est ouvert, le condensateur C1 ne peut pas se décharger pour alimenter un circuit connecté entre les bornes A et G. Il est ainsi possible de continuer à fournir l'alimentation entre les bornes A et G à partir de la tension redressée du secteur même après que le condensateur C1 a été complètement chargé et que la tension aux bornes du secteur commence à décroître. Les avantages de ce circuit sont multiples.

Premièrement, quand on fait ensuite appel au condensateur C1 pour alimenter le circuit, ce condensateur servira moins longtemps à l'alimentation du circuit et se déchargera moins. La tension entre les bornes A et G sera donc davantage lissée que dans le cas du circuit de la figure 1A.

Deuxièmement, la prévision de la résistance R1 en série avec le condensateur C1 limite la raideur du front de montée du courant de charge.

Troisièmement, la largeur du courant extrait du secteur est augmentée.

La partie supérieure de la figure 4A représente la tension VA sur la borne A. Au voisinage de l'instant t1, le commutateur SW1 est ouvert (off) et le condensateur C1 peut se charger mais pas se décharger. A un instant t2 où la tension VA devient inférieure à la tension de référence Ur1, le commutateur SW1 est fermé (on) et l'on retrouve sur la borne A la tension de pleine charge du condensateur C1. Ensuite, entre les instants t2 et t3, le condensateur alimente le circuit et se décharge régulièrement. A l'instant t3, la tension VA atteint la tension de référence U1 et le commutateur SW1 est à nouveau ouvert. La tension sur la borne A chute alors à la valeur de la tension du secteur à ce moment puis remonte en suivant l'alternance du secteur et le cycle se répète à partir de l'instant t'1.

La figure 4B représente la tension VC1 aux bornes du condensateur C1. A l'instant t1, cette tension est maximale et reste sensiblement constante jusqu'à l'instant t2 tandis que le condensateur ne peut pas se décharger. Ensuite le condensateur se décharge régulièrement entre les instants t2 et t3, reste à charge constante pendant une courte durée jusqu'à ce que la tension de secteur ait rattrapé la valeur de la tension aux bornes du condensateur à l'instant t3, puis se recharge jusqu'à l'instant t'1.

La figure 4C représente l'allure (redressée) du courant I1 extrait du secteur pendant ces diverses phases. Entre les instants t1 et t2, c'est le secteur qui alimente le circuit connecté aux bornes A et G et, si l'on suppose que la puissance consommée entre les bornes A et G est constante, tandis que la tension du secteur décroît, le courant croît légèrement pour fournir une puissance constante. Entre les instants t2 et t3, aucun appel de courant n'est demandé au secteur puisque le courant est fourni par le condensateur C1. Ensuite, à partir du moment où la tension du secteur a rattrapé la tension présente aux bornes du condensateur, un courant est extrait du secteur pour alimenter le circuit de charge et charger le condensateur. On notera que ce courant croît moins rapidement que le courant illustré en figure 1B en raison de la présence de la résistance R1. Ensuite, à partir de l'instant t'1, on retrouve, un courant d'alimentation du circuit placé entre les bornes A et G à partir du secteur jusqu'à l'instant t'2.

Ainsi, comme le représente bien la figure 4C, le secteur, au lieu de fournir au circuit de redressement une impulsion de courant brève, fournit une impulsion ayant des flancs élargis en raison de l'alimentation directe par le secteur du circuit entre les bornes A et G.

La figure 4D représente les signaux fournis aux bornes R et S pour commander la bascule FF1 et obtenir de façon appropriée les commandes de fermeture et d'ouverture du commutateur SW1. Sensiblement à l'instant t2, le signal S passe de 0 à 1 et le signal sur la borne Q ferme l'interrupteur SW1. Sensiblement à l'instant t3, la commutation du signal R fait basculer la sortie Q. A l'instant t'2 la commutation du signal S de 0 à 1 fera basculer à nouveau la sortie Q. On obtient donc bien le résultat recherché par un circuit de commande simple comprenant simplement deux amplificateurs inverseurs et une bascule. On notera d'ailleurs que les tensions de référence U1 et Ur1 pourraient être égales, ce qui permet de simplifier le circuit de commande.

Toutefois, l'amélioration apportée par le circuit de la figure 3 est en pratique insuffisante. Pour améliorer la largeur du pic de courant extrait du secteur, selon l'invention, il est prévu de multiplier le nombre d'étages du circuit illustré en figure 3.

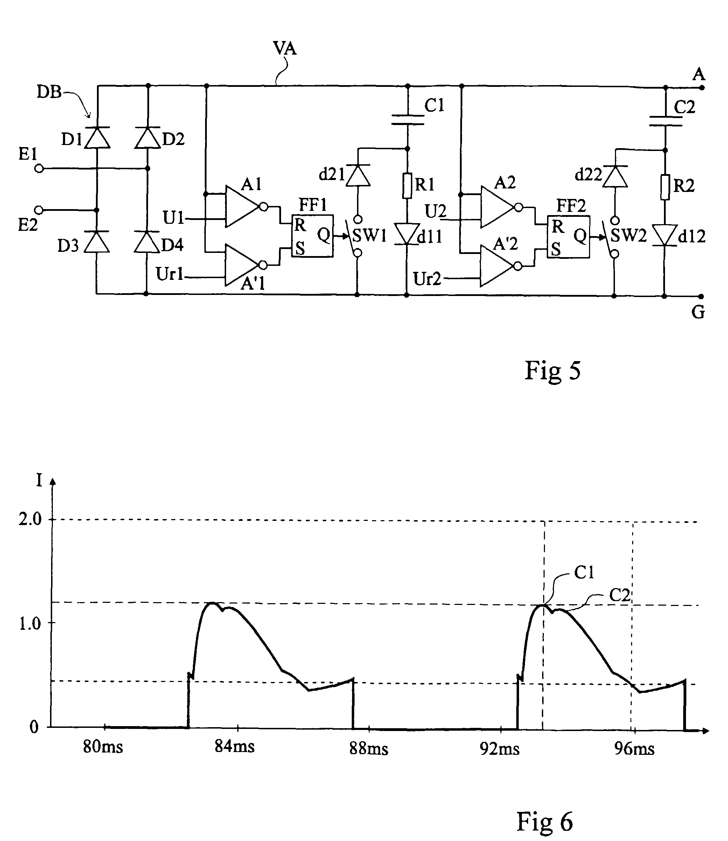

En figure 5, on retrouve dans la partie gauche exactement les mêmes éléments qu'en figure 3 mais on a rajouté un étage supplémentaire identique. Les composants de ce deuxième étage portent les mêmes références que les composants correspondants du premier étage mais avec un indice 2 au lieu d'un indice 1. Le condensateur C2 du deuxième étage a une valeur plus élevée que le condensateur C1 du premier étage et la constante de temps R2.C2 est plus élevée que la constante de temps R1.C1. De préférence, R2 est supérieur à R1. Les tensions de référence Ur2 et U2 sont respectivement supérieures ou égales aux tensions Ur1 et U1.

On obtient donc comme le représente la figure 6, un étalement supplémentaire du pic de courant de charge des condensateurs. Un premier pic correspond à la charge du condensateur C1 qui se charge très rapidement avec une constante de temps relativement faible et un deuxième pic plus large et retardé correspond à la charge du condensateur C2 qui se charge avec une constante de temps plus forte.

On a donc bien obtenu comme on le souhaitait un élargissement de l'impulsion de courant extraite du secteur pour charger les condensateurs et on réduit donc l'amplitude des harmoniques renvoyés sur le secteur.

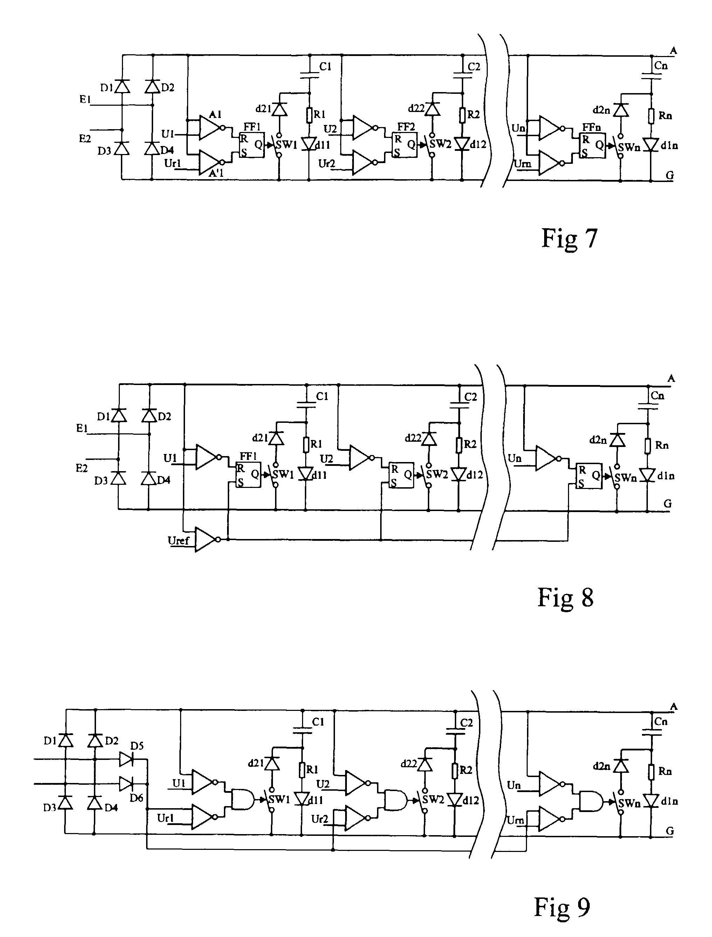

La figure 7 représente un circuit à n étages dont chaque étage est similaire ceux décrits précédemment en relation avec les figures 3 et 5.

La figure 8 représente un circuit sensiblement similaire à celui de la figure 7 mais dans lequel toutes les tensions Uri sont égales à une même tension Uref.

Dans le circuit de la figure 9, le circuit de commande de chacun des commutateurs SWi est constitué de deux comparateurs dont les sorties sont reliées à une porte ET qui commande le commutateur. Le premier comparateur a sa première entrée reliée à la borne A et sa deuxième entrée à une tension de référence Ui. Le deuxième comparateur a sa première borne qui reçoit la tension redressée simple alternance du secteur par l'intermédiaire de diodes D5 et D6 et sa deuxième borne qui, comme précédemment, est reliée à une tension de référence Uri. L'homme de métier notera que ceci simplifie la conception logique du système.

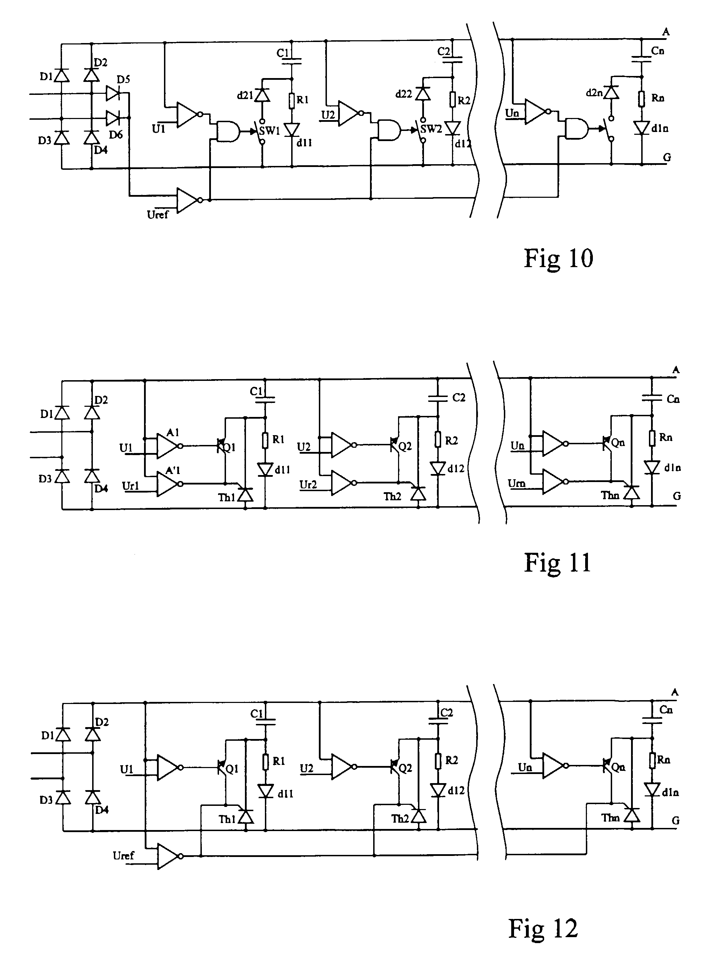

Le schéma de la figure 10 est identique à celui de la figure 9 sauf que tous les deuxièmes comparateurs ont leur deuxième entrée connectée à une même tension de référence Uref. Il suffit donc d'un seul deuxième comparateur.

La figure 11 représente un mode de réalisation particulier du circuit de la figure 7. Ce circuit comprend n cellules identiques dont seule la première sera décrite. Le chemin de charge du condensateur C1 comprend toujours une résistance R1 et une diode d11. Le trajet de décharge du condensateur C1 comprend un thyristor Th1 dont l'anode est reliée à la borne G et la cathode au point de raccordement de la résistance R1 et du condensateur C1. En parallèle entre gâchette et cathode du thyristor Th1 est placé un transistor Q1 dont la base est connectée à la sortie d'un premier comparateur A1 tandis que la gâchette du thyristor Th1 est également connectée à la sortie d'un deuxième comparateur A'1. Les premières entrées des comparateurs A1 et A'1 reçoivent la tension VA et les deuxièmes entrées des comparateurs A1 et A'1 reçoivent respectivement les tensions U1 et Ur1. On notera que le fonctionnement de ce circuit est bien celui décrit en relation avec la figure 7.

La figure 12 représente l'application du circuit particulier décrit en figure 11 au mode de réalisation de la figure 8.

Bien entendu, la présente invention est susceptible de diverses variantes et modifications qui apparaîtront à l'homme de l'art, les aspects fondamentaux de la présente invention comprenant les points suivants :
- réduire la raideur du front de montée du courant de charge des condensateurs de stockage en plaçant en série dans le chemin de charge de ces condensateurs une résistance,
- inhiber la décharge des condensateurs de stockage pendant la phase initiale de décroissance de la tension secteur pour, pendant cette phase, continuer à extraire du courant du secteur et donc rallonger la durée du courant extrait de ce secteur,
- multiplier le nombre de cellules pour étaler davantage le courant de charge des condensateurs, les condensateurs des diverses cellules ayant des constantes de temps de charge différentes.

Dans un cas particulier de la présente invention, utilisant seulement deux cellules et pour une tension du secteur de 230 volts efficace, on a choisi les valeurs suivantes :
C1 = 15 microfarads,
C2 = 30 microfarads,
R1 = 20 ohms,
R2 = 100 ohms,
Ur1 = Ur2 = U1 = 230 volts,
U2 = 290 volts.

On a alors obtenu pour le courant la courbe illustrée en figure 6, le facteur de puissance était de l'ordre de 0,82 et la puissance consommée sur le réseau, rajoutée essentiellement par les résistances R1 et R2, était seulement de 2,7 % de la puissance utile.

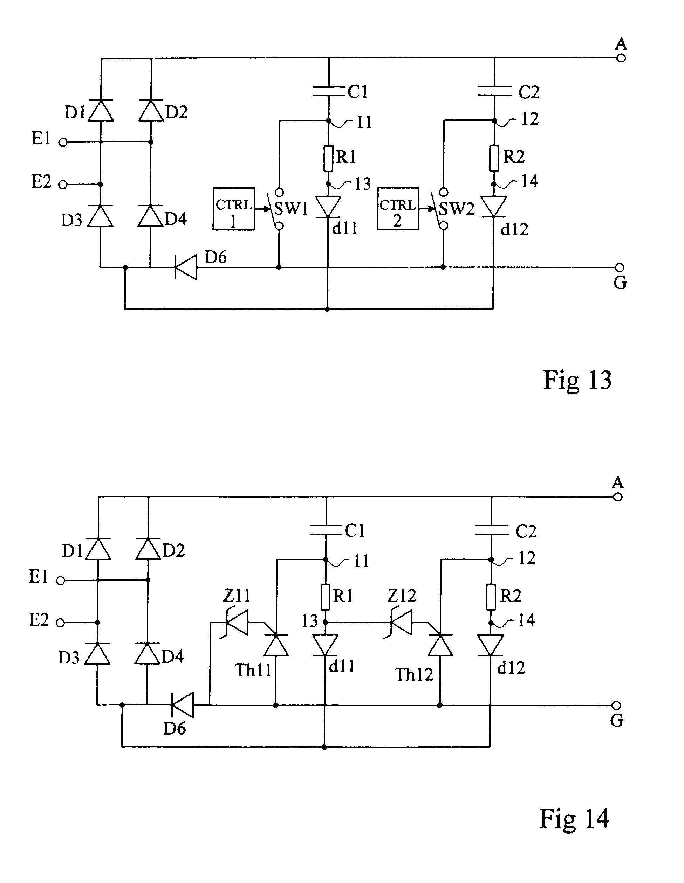

La figure 13 et les suivantes concernent une variante de réalisation de la présente invention adaptée à une commande séquentielle des condensateurs dans un dispositif à plusieurs étages.

La figure 13 représente un dispositif à deux étages dans lequel des éléments identiques à ceux déjà décrits en relation avec la figure 5 portent les mêmes références.

Dans ce dispositif les chemins de décharge des condensateurs C1, C2 ne comprennent pas de diodes d'isolement individuelles d21, d22 mais sont connectés d'une part directement à la borne G, d'autre part à la borne inférieure du pont redresseur par l'intermédiaire d'une diode D6. Cette diode D6 évite que la décharge de l'un des condensateurs se fasse à travers l'autre condensateur. Les chemins de charge sont connectés aux bornes du pont redresseur.

Les commutateurs SW1 et SW2 sont commandés par des circuits de commande CTRL1, CTRL2 de façon à ne jamais être fermés simultanément. Plus particulièrement, si l'on considère le cas où la constante de temps R1.C1 est nettement supérieure à la constante de temps R2.C2 (et de préférence où C1 est supérieur à C2), le commutateur SW1 sera fermé d'abord avec un certain retard par rapport au passage par un maximum de la tension du secteur. Ensuite, après un deuxième retard, le commutateur SW1 est ouvert et le commutateur SW2 est fermé.

On considérera le cas particulier où le commutateur SW2 est fermé jusqu'à ce que la tension aux bornes du condensateur C2 devienne égale à la tension du secteur. Ainsi, on ne prévoit pas dans ce mode de réalisation une ouverture anticipée du second commutateur. Pour se placer dans le cadre des notations de la figure 4A, ceci correspond à prévoir seulement les seuils Ur1 et Ur2 et pas les seuils U1 et U2. Toutefois, cette modification serait possible pour l'homme de l'art. De plus, bien que seulement deux étages successifs correspondant aux condensateurs C1 et C2 soient décrits en relation avec la figure 13, on pourrait comme précédemment multiplier le nombre d'étages, les condensateurs de plus forte valeur étant mis en décharge avant les condensateurs de plus faible valeur.

La figure 14 représente un exemple de réalisation des commutateurs SW1 et SW2 et de leurs circuits de commande associés CTRL1 et CTRL2. Les commutateurs SW1 et SW2 sont réalisés sous forme de thyristors Th11 et Th12 connectés entre les deuxièmes bornes 11, 12 des condensateurs C1, C2 et la borne G. La commande du thyristor Th11 est assurée par une diode zener Z11 connectée entre gâchette et anode de ce thyristor. Le dispositif de commande CTRL2 est réalisé sous forme d'une diode zener Z12 connectée entre la gâchette du thyristor Th12 et le point de connexion 13 de la résistance R1 et la diode d11. Si une chaîne plus importante de condensateurs était utilisée, on reproduirait le montage de l'ensemble des composants C2, R2, d12, Th12 et Z12, la diode zener du troisième étage étant reliée au point de connexion 14 de la résistance R2 et de la diode d12, et ainsi de suite.

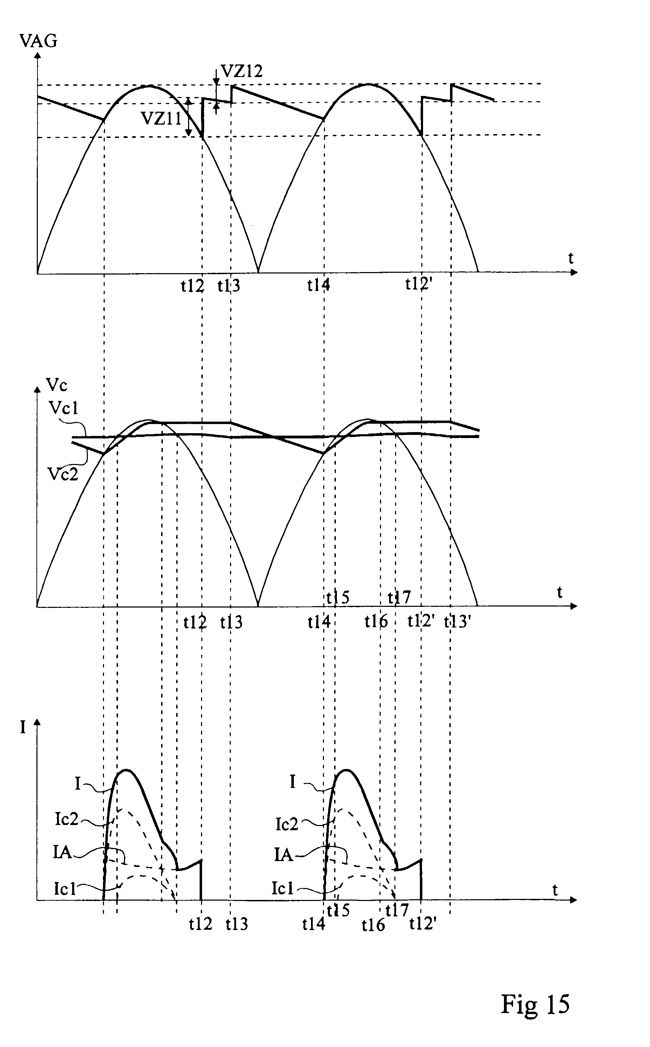

Le fonctionnement du circuit selon la variante des figures 13 et 14 va être expliqué en relation avec la figure 15 qui représente, en fonction du temps, la tension VAG aux bornes d'utilisation ; les tensions VC1 et VC2 aux bornes des condensateurs C1 et C2 ; et le courant I fourni par le secteur.

On part d'un instant initial où la tension du secteur est voisine d'un maximum et où les commutateurs SW1 et SW2 (les thyristors Th11 et Th12) sont ouverts. Tandis que la tension sur la borne A décroît, la tension sur la deuxième borne du condensateur C1 décroît (puisque ce condensateur n'est ni chargé ni déchargé) et, quand la tension du secteur a chuté sensiblement de la tension zener VZ11 de la diode Z11, un courant de gâchette circule dans le thyristor Th11 qui devient conducteur. A partir de ce moment (instant t12), l'alimentation des bornes A et G est fournie par le condensateur C1. Celui-ci se décharge alors lentement. Pendant cette phase, le condensateur C2 maintient sa charge, c'est-à-dire que la tension sur sa borne 12 décroît également progressivement.

A un instant t13, la tension sur la borne 11 du condensateur C1 devient supérieure à la tension sur la borne 12 du condensateur C2 de la valeur de la tension de seuil VZ12 de la diode zener Z12. La diode Z12 entre en avalanche et commande la mise en conduction du thyristor Th12. A partir de ce moment, le condensateur C2 assure l'alimentation entre les bornes A et G et le potentiel sur la borne 11 du condensateur C1 remonte rapidement par l'intermédiaire du thyristor Th12 et de la diode Z12 en direct. Ainsi, les deux bornes du thyristor Th11 se trouvent au même potentiel et ce thyristor entre dans un état de blocage.

Le condensateur C2 se décharge progressivement jusqu'à ce que, à un instant t14, la tension aux bornes du secteur devienne supérieure à la tension aux bornes du condensateur, instant auquel le secteur prend le relais de l'alimentation des bornes A et G et le thyristor Th12 se bloque automatiquement. Ensuite, à un instant t12', on retrouve la situation existant à l'instant t12, et l'alimentation est assurée par le secteur.

Examinons maintenant plus en détail l'allure des tensions aux bornes des condensateurs, en se rappelant que l'on s'est placé dans l'hypothèse où la constante de temps R1.C1 est nettement supérieure à la constante de temps R2.C2 et où, de préférence, C1 est supérieur à C2.

Entre les instants t12 et t13, le condensateur C1 de forte valeur se décharge légèrement tandis que la tension aux bornes du condensateur C2 reste constante. Entre les instants t13 et t14, le condensateur C2 se décharge tandis que la tension aux bornes du condensateur C1 reste constante (ni charge, ni décharge). A partir de l'instant t14, le condensateur C2 commence à se charger et le condensateur C1 commence à se charger à un instant légèrement ultérieur t15 dès que la tension du secteur dépasse la tension à ses bornes. Le condensateur C2 continue à se charger jusqu'à un instant t16, situé légèrement après le maximum de la tension du secteur, instant auquel il se trouve complètement chargé. Pour sa part, le condensateur C1 qui se charge très lentement cesse de se charger seulement à un instant t17 postérieur à l'instant t16. A partir de l'instant t16, la charge du condensateur C2 reste constante et à partir de l'instant t17 la charge du condensateur C1 reste constante. Ensuite, à partir de l'instant t12', on se retrouve dans la configuration expliquée en relation avec l'instant t12.

Ainsi, entre les instants t14 et t12', le courant I extrait du secteur correspond à la superposition de trois courants : un courant IC2 de charge du condensateur C2, un courant IC1 de charge du condensateur C1 et un courant IA d'alimentation de la charge. Comme le montrent les courbes, cette superposition permet un élargissement adéquat du pic de courant extrait du secteur.

On aurait pu encore élargir ce pic de courant en prévoyant une phase préliminaire correspondant à celle suivant l'instant t3 en figure 4C. On s'aperçoit en pratique que l'élargissement déjà obtenu est suffisant et qu'il est inutile de complexifier les circuits logiques pour obtenir un élargissement supplémentaire. Toutefois, il sera toujours possible pour l'homme de l'art, pour satisfaire à des contraintes particulières, de prévoir une phase préliminaire telle que celle suivant l'instant t3 en figure 4C.

A titre d'exemple de valeurs numériques, dans le cas où le secteur présente une tension crête de l'ordre de 300 volts, on pourra choisir pour les tensions d'avalanche des diodes zener Z1 et Z2 des valeurs respectives de 70 et 40 volts.

On notera que les tensions présentes sur les deuxièmes bornes 11 et 12 des condensateurs C1 et C2, au point de connexion 13 de la résistance R1 et de la diode d11, et au point de connexion 14 de la résistance R2 de la diode d12, sont des tensions qui présentent des valeurs de crête positives par rapport à la borne G et faibles devant la tension de la borne A.

Ainsi, selon un aspect de la présente invention, on utilise l'une ou l'autre de ces tensions pour fournir une source de faible tension continue. Ceci permet d'obtenir à partir d'un seul et même circuit une tension forte et une tension faible dans un rapport prédéterminé l'une par rapport à l'autre, sans qu'il faille utiliser un transformateur à secondaires multiples.

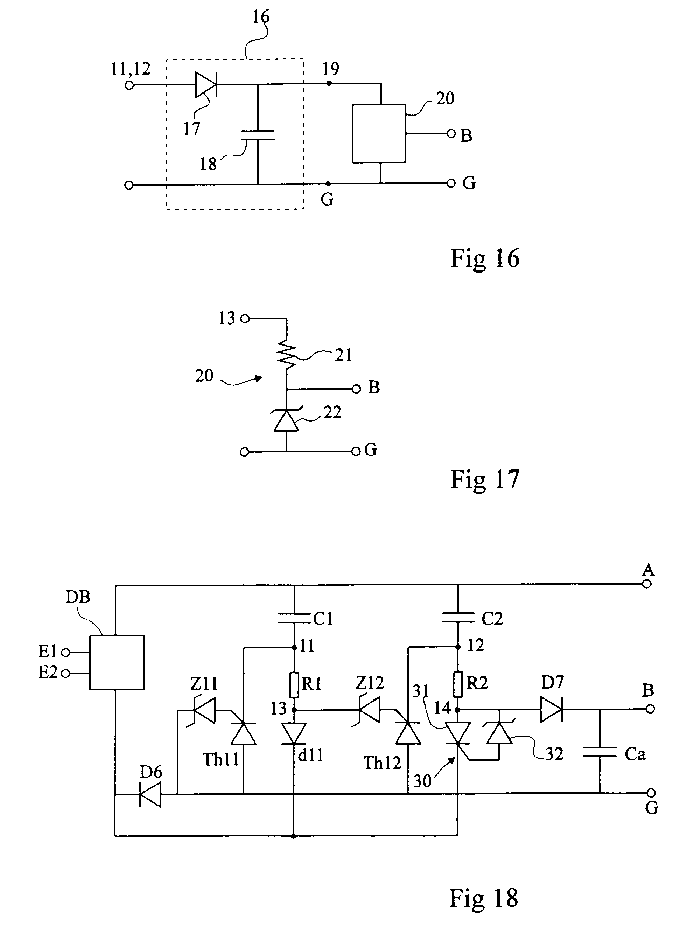

Comme cela est représenté en figure 16, la tension sur la borne 11 ou 12 peut tout simplement être fournie à un redresseur crête 16 comprenant par exemple une diode 17 en série et un condensateur 18 en parallèle. On dispose ainsi au point de connexion 19 de la diode 17 et du condensateur 18 d'une tension redressée. Cette tension redressée peut être régulée par un dispositif de régulation série ou parallèle, par exemple un dispositif de régulation parallèle 20 pour fournir sur une borne B une tension régulée de faible valeur.

La figure 17 représente un exemple élémentaire de régulateur parallèle pouvant être utilisé comme régulateur 20. Toutefois, de façon connue, un tel régulateur souffre de l'inconvénient d'une dissipation de puissance dans la résistance 21.

La figure 18 représente un exemple de modification du circuit selon la présente invention de la figure 14, adapté à la fourniture simultanée de tensions haute et basse, sans entraîner de surconsommation par pertes ohmiques pour l'obtention de la tension d'alimentation basse.

La figure 18 reprend les mêmes éléments que ceux de la figure 14 avec les mêmes références. Notamment, le premier étage de stockage d'énergie comprenant le condensateur C1 n'est pas modifié. En ce qui concerne le deuxième étage, le chemin de décharge du condensateur C2 reste identique à celui de la figure 14. Par contre, le chemin de charge a été modifié. Il comporte toujours entre les bornes 12 et 14 la résistance R2. Toutefois, la borne 14 est cette fois-ci reliée à la borne G par l'intermédiaire de la connexion en série d'une diode D7 et d'un condensateur auxiliaire Ca. Un composant de limitation de tension 30, du type diode de Shockley, comprenant par exemple un thyristor 31 dont la gâchette est reliée à l'anode par une diode zener 32 limite la tension aux bornes de la connexion en série de la diode D7, du condensateur Ca et de la diode D6.

Dans le circuit de la figure 18, tandis que le condensateur C2 se charge, le condensateur Ca se charge simultanément à une tension qui correspond sensiblement à la tension de seuil de la diode zener 32 (moins les chutes de tension en direct dans les diodes D6 et D7, plus la chute de tension gâchette-cathode du thyristor 31). On obtient donc bien entre les bornes B et G une tension faible devant la tension présente entre les bornes A et G. Quand le condensateur Ca est complètement chargé, au seuil souhaité, la diode zener 32 entraîne la mise en conduction du thyristor 31. Le condensateur Ca ne peut pas se décharger dans ce thyristor en raison de la présence de la diode D7 et la charge du condensateur C2 continue et est réduite seulement de la faible chute de tension aux bornes du thyristor 31 à l'état passant. Ainsi, la présence du condensateur auxiliaire Ca constituant une source de tension auxiliaire, n'entraîne pas de pertes ohmiques supplémentaires dans le circuit.

Bien entendu, la présente invention est susceptible de nombreuses variantes qui apparaîtront à l'homme de l'art et l'on notera essentiellement les deux caractéristiques suivantes :
- fourniture simultanée d'une source de tension de valeur élevée et d'une source de tension de valeur faible,
- réalisation de la source de tension de valeur faible sans consommation ohmique.

## Revendications

1. Procédé de fourniture d'une tension d'alimentation redressée sur au moins deux condensateurs disposés en parallèle du côté redressé d'un pont redresseur, caractérisé en ce qu'il comprend les étapes suivantes :
prévoir une pluralité de condensateurs de valeurs progressivement décroissantes respectivement en série avec des résistances également de valeurs décroissantes, chaque condensateur étant associé à un chemin de charge comprenant une desdites résistances et à un chemin de décharge commutable,
inhiber la décharge des condensateurs pendant la phase initiale de décroissance de la tension alternative appliquée au pont redresseur après chaque passage par un maximum,
les durées d'inhibition des condensateurs de valeur progressivement décroissantes étant croissantes et, dès qu'un condensateur est mis en phase de décharge, le condensateur précédemment en décharge étant bloqué.

2. Dispositif d'amélioration du taux d'harmoniques renvoyés sur le secteur dans une alimentation redressée comprenant un pont redresseur (DB), comprenant :
une pluralité de condensateurs de valeurs séquentiellement décroissantes connectés à une première borne de sortie (A) du pont redresseur,
un premier chemin de charge (Ri, D1i) comprenant une résistance entre la deuxième borne de chaque condensateur et une deuxième borne de sortie (G), et
un deuxième chemin de décharge (SWi, D2i) commutable, associé à des moyens de commande pour commuter à l'état fermé le chemin de décharge seulement après le passage par un maximum de la tension du secteur, les chemins de décharge étant séquentiellement fermés, un seul chemin de décharge étant fermé à un instant donné.

3. Dispositif selon la revendication 2, caractérisé en ce que les moyens de commande comparent la tension sur la première borne à deux tensions de référence (Ui, Uri).

4. Dispositif selon la revendication 2, caractérisé en ce que les moyens de commande comparent la tension du secteur redressée à deux tensions de référence (Ui, Uri).

5. Dispositif selon la revendication 3 ou 4, caractérisé en ce que les deuxièmes tensions de références (Uri) sont égales.

6. Dispositif selon la revendication 2, caractérisé en ce que chaque chemin de charge comprend une résistance (R1, R2) en série avec une diode (d11, d12).

7. Dispositif selon la revendication 2, caractérisé en ce que chaque chemin de charge comprend un condensateur (C1, C2), une résistance (R1, R2), et une diode (d11, d12), et chaque chemin de décharge comprend un commutateur (SW1, SW2) connecté à la deuxième borne d'alimentation (G) et à la deuxième borne du pont redresseur par l'intermédiaire d'une diode commune (D6).

8. Dispositif selon la revendication 7, caractérisé en ce que le commutateur de chaque chemin de décharge est constitué d'un thyristor (Th11, Th12) dont la gâchette est connectée en série avec une diode zener (Z11, Z12) dont la deuxième borne est reliée, pour le premier étage, à l'anode du thyristor correspondant et, pour les autres étages, au point de connexion de la résistance et de la diode de l'étage précédent.

9. Dispositif selon la revendication 8, caractérisé en ce qu'il comprend en outre des moyens de fourniture d'une deuxième tension d'alimentation redressée, faible devant la première tension d'alimentation redressée, correspondant sensiblement au potentiel sur la deuxième borne de l'un des condensateurs (C1, C2).

10. Dispositif selon la revendication 9, caractérisé en ce que la tension sur ladite deuxième borne (11, 12) est envoyée à un circuit de stockage comprenant une diode (D7) en série avec un condensateur auxiliaire (Ca).

11. Dispositif selon la revendication 10, caractérisé en ce qu'il comprend en outre des moyens (20) de régulation de la tension aux bornes du condensateur auxiliaire (Ca).

12. Dispositif selon la revendication 10, caractérisé en ce que les moyens de régulation comprennent une diode de type Shockley connectée aux bornes de la liaison série comprenant ladite diode (D7) et ledit condensateur auxiliaire (Ca).

## Patentansprüche

1. Verfahren zur Erzeugung einer gleichgerichteten Speisespannung an wenigstens zwei parallel auf der Gleichrichtseite einer Gleichrichtbrücke angeordneten Kondensatoren,
dadurch gekennzeichnet, daß das Verfahren die folgenden Stufen umfaßt:
- Anordnung einer Mehrzahl von Kondensatoren von fortschreitend abnehmender Größe jeweils in Reihe mit Widerständen von gleichfalls abnehmender Größe, wobei jeweils jeder Kondensator einem einen der genannten Widerstände umfassenden Ladestromweg und einem schaltbaren Entladestromweg zugeordnet ist,
- Verhinderung der Entladung der Kondensatoren während der Anfangsphase der Abnahme der an die Gleichrichtbrücke angelegten Wechselspannung jeweils nach dem Durchgang durch ein Maximum,
- wobei die Verhinderungszeiten der Kondensatoren mit progressiv abnehmender Größe zunehmen und, sobald ein Kondensator in eine Entladephase versetzt wird, der vorhergehend im Entladezustand befindliche Kondensator gesperrt wird.

2. Vorrichtung zur Verbesserung des Anteils von in das Netz reflektierten Harmonischen in einer eine Gleichrichtbrücke (DB) aufweisenden Gleichricht-Stromversorgung, wobei die Vorrichtung umfaßt:
- mehrere Kondensatoren von sequentiell abnehmender Größe, die jeweils mit einem ersten Ausgangsanschluß (A) der Gleichrichtbrücke verbunden sind,
- einen ersten Ladestromweg (Ri, D1i) mit einem Widerstand zwischen dem zweiten Anschluß jeweils jedes Kondensators und einem zweiten Ausgangsanschluß (G), sowie
- einen schaltbaren zweiten Entladestromweg (SWi, D2i) in Zuordnung zu Steuermitteln, derart daß die Umschaltung des Entladestrompfads in den geschlossenen Zustand nur nach dem Durchgang der Netzspannung durch ein Maximum erfolgt, wobei die Entladestromwege sequentiell geschlossen werden und jeweils in einem gegebenen Zeitpunkt nur ein Entladestromweg geschlossen ist.

3. Vorrichtung nach Anspruch 2,
dadurch gekennzeichnet, daß die Steuermittel die Spannung an dem ersten Anschluß mit zwei Bezugsspannungen (Ui, Uri) vergleichen.

4. Vorrichtung nach Anspruch 2,
dadurch gekennzeichnet, daß die Steuermittel die gleichgerichtete Netzspannung mit zwei Bezugsspannungen (Ui, Uri) vergleichen.

5. Vorrichtung nach den Ansprüchen 3 oder 4,
dadurch gekennzeichnet, daß die zweiten Bezugsspannungen (Uri) gleich sind.

6. Vorrichtung nach Anspruch 2,
dadurch gekennzeichnet, daß jeweils jeder Ladestromweg einen Widerstand (R1, R2) in Reihe mit einer Diode (d11, d12) aufweist.

7. Vorrichtung nach Anspruch 2,
dadurch gekennzeichnet, daß jeweils jeder Ladestromweg einen Kondensator (C1, C2), einen Widerstand (R1, R2) und eine Diode (d11, d12) umfaßt und daß jeweils jeder Entladestromweg einen Schalter (SW1, SW2) aufweist, der mit dem zweiten Speiseanschluß (G) und mit dem zweiten Anschluß der Gleichrichtbrücke über eine gemeinsame Diode (D6) verbunden ist.

8. Vorrichtung nach Anspruch 7,
dadurch gekennzeichnet, daß der Schalter jedes der Stromwege jeweils aus einem Thyristor (Th11, Th12) besteht, dessen Gate in Reihe mit einer Zener-Diode (Z11, Z12) liegt, deren zweiter Anschluß für die erste Stufe mit der Anode des entsprechenden Thyristors und für die weiteren Stufen mit der Verbindungsstelle zwischen dem Widerstand und der Diode der vorhergehenden Stufe verbunden ist.

9. Vorrichtung nach Anspruch 8,
dadurch gekennzeichnet, daß sie des weiteren Mittel zur Lieferung einer zweiten Gleichricht-Speisespannung aufweist, die klein im Vergleich zur ersten Gleichricht-Speisespannung ist und im wesentlichen dem Potential an dem zweiten Anschluß eines der Kondensatoren (C1, C2) entspricht.

10. Vorrichtung nach Anspruch 9,
dadurch gekennzeichnet, daß die Spannung an dem genannten zweiten Anschluß (11, 12) einer Speicherschaltung zugeführt wird, welche eine Diode (D7) in Reihe mit einem Hilfskondensator (Ca) aufweist.

11. Vorrichtung nach Anspruch 10,
dadurch gekennzeichnet, daß sie des weiteren Mittel (20) zur Regelung der Spannung an den Anschlüssen des Hilfskondensators (Ca) aufweist.

12. Vorrichtung nach Anspruch 10,
dadurch gekennzeichnet, daß die Regelmittel eine Diode vom Shockley-Typ umfassen, welche mit den Anschlüssen des die genannte Diode (D7) und den genannten Hilfskondensator (Ca) umfassenden Reihenschaltungsglieds verbunden ist.

## Claims

1. A method for supplying a rectified supply voltage on at least two capacitors disposed in parallel on the rectified side of a rectifying bridge, characterized in that it includes the following steps:
providing a plurality of capacitors having progressively decreasing values, in series with resistors having equally decreasing values, each capacitor being associated with a charge path including one of said resistor and with a switchable discharge path,
inhibiting a discharge of the capacitors during an initial decrease phase of an alternating current voltage applied to the rectifying bridge after each occurrence of a maximum,
the duration of inhibition of the capacitors of progressively decreasing values being increasing and, as soon as a capacitor enters a discharge phase, the previously discharging capacitor being blocked.

2. A device for improving a harmonic ratio sent back onto a mains in a rectified power supply including a rectifying bridge (DB), comprising:
a plurality of capacitors having sequentially decreasing values connected to a first output terminal (A) of the rectifying bridge,
a first charge path (Ri, D1i) including a resistor, between a second terminal of each capacitor and a second output terminal (G), and
a second switchable discharge path (SWi), D2i), associated with control means to switch on the discharge path only after the supply voltage has transited through a maximum, the discharge paths being sequentially turned on, only one discharge path being on at a given time.

3. A device according to claim 2, characterized in that the control means compare the voltage on the first terminal to two reference voltages (Ui, Uri).

4. A device according to claim 2, characterized in that the control means compare the rectified supply voltage to two reference voltages (Ui, Uri).

5. A device according to claim 3 or 4, characterized in that the second reference voltages (Uri) are equal.

6. A device according to claim 2, characterized in that each charge path includes a resistor (R1, R2) in series with a diode (d11, d12).

7. A device according to claim 2, characterized in that each charge path includes a capacitor (C1, C2), a resistor (R1, R2), and a diode (d11, d12), and each discharge path includes a switch (SW1, SW2) connected to the second supply terminal (G) and to the second terminal of the rectifying bridge via a common diode (D6).

8. A device according to claim 7, characterized in that the switch of each discharge path is constituted by a thyristor (Th11, Th12) having its gate connected in series with a Zener diode (Z11, Z12) having its second terminal connected, for a first stage, to the anode of the corresponding thyristor and, for the other stages, to the junction of the resistor and of the diode of the preceding stage.

9. A device according to claim 8, characterized in that it further includes means for supplying a second rectified supply voltage, which is low with respect to the first rectified supply voltage and substantially corresponds to the voltage on the second terminal of one of the capacitors (C1, C2).

10. A device according to claim 9, characterized in that the voltage on said second terminal (11, 12) is supplied to a storage circuit including a diode (D7) in series with an auxiliary capacitor (Ca).

11. A device according to claim 10, characterized in that it further includes means (20) for regulating the voltage across the auxiliary capacitor (Ca).

12. A device according to claim 10, characterized in that the regulating means include a Shockley-type diode connected across the series connection including said diode (D7) and said auxiliary capacitor (Ca).
